# EUROPEAN PATENT APPLICATION

(11) **EP 2 990 670 A1**
(43) Date of publication of application: **02.03.2016**
(21) Application number: 14787535.5
(22) Date of filing: 21.04.2014
(51) Int. Cl.: F16C 33/44, F16C 19/14

(54) **CAGE FOR ROLLING BEARING**

(30) Priority: 25.04.2013 JP 2013092124
(71) Applicant: NTN Corporation, Osaka-shi, Osaka 550-0003 (JP)
(72) Inventor: TANIMURA Hiroki, Kuwana-shi Mie 511-0811 (JP)
(74) Representative: Grünecker Patent- und Rechtsanwälte PartG mbB
(86) International application number: PCT/JP2014/061157
(87) International publication number: WO 2014/175210

(57) **Abstract**

An object of the present invention is to provide a retainer 3 which can be made of a quick-wearing material such as ductile iron (spherical graphite cast iron) like a retainer 3 used in an angular ball bearing for a screw compressor yet can prevent premature wearing of a guide surface. A retainer 3 of an inner ring guide type for a rolling bearing, which makes contact with an inner ring 1 and is guided thereby during operation, has a guide clearance "b" with respect to the inner ring 1, and a pocket clearance "a". The pocket clearance has a ratio to the guide clearance in a range from 75% through to 100%, which makes it possible to use easy-wearing materials such as ductile iron.

## Description

### TECHNICAL FIELD

The present invention relates to retainers for angular ball bearings utilized in screw compressors which work with compressor oil, freezer oil, ammonia refrigerant, etc.

### BACKGROUND ART

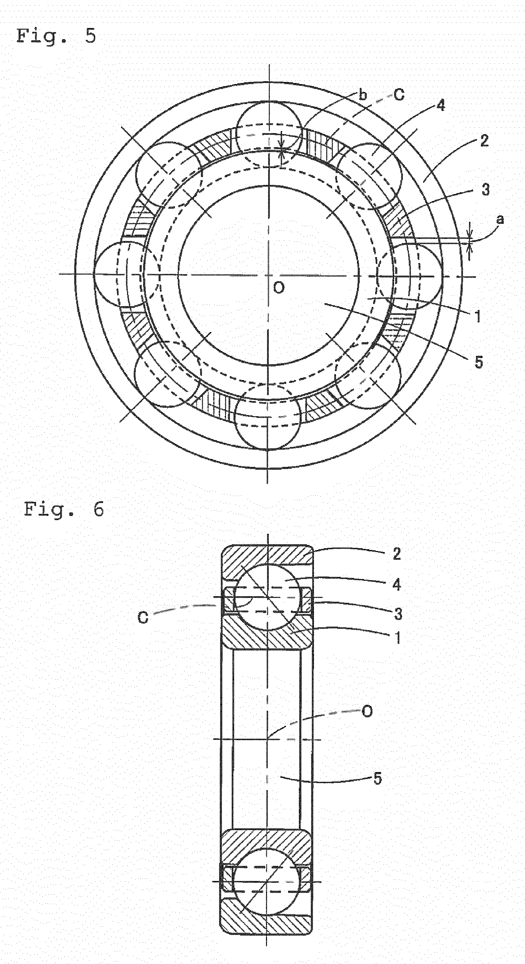

As shown in Fig. 5, a retainer 3 of a rolling bearing provides several functions; it keeps rolling elements 4 spaced at a uniform distance so that they will not make contact with each other; it holds the rolling elements 4 so that they will not roll off track rings (inner ring 1 and outer ring 2); and it guides the rolling elements 4 as they roll.

The retainer 3 of a rolling bearing has pocket clearances "a" between itself and the rolling elements 4, and guide clearances "b" between itself and the track rings, and is designed so that it is able to move freely in a three-dimensional fashion in the bearing within a range allowed by these clearances.

The retainer 3 of a rolling bearing can be classified into one of three guide types depending on how the guide clearances are provided between itself and shoulders of the track rings 1, 2. Rolling element guide type is shown in Fig. 7, outer ring guide type is shown in Fig. 8, and inner ring guide type is shown in Fig. 9.

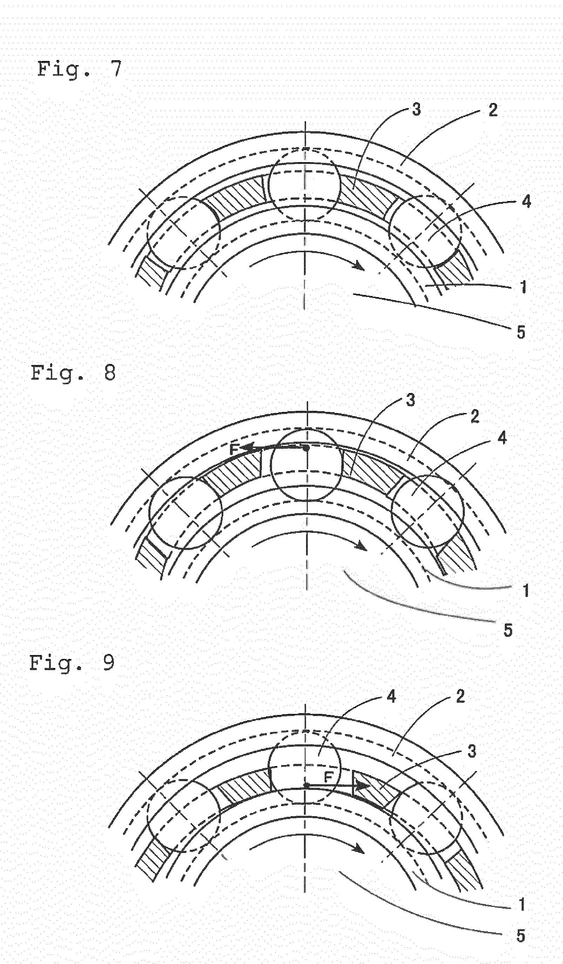

In small bearings, the retainer 3 is designed so that neither its inner diameter side nor outer diameter side will make contact with the inner ring 1 or the outer ring 2. Thus, the retainer 3 is supplied with rotating drive and guide only by the rolling elements 4. This type is called rolling element guide retainer (Fig. 7).

In large bearings, the retainer 3 is designed so that an outer diameter surface thereof makes contact with shoulders of the outer ring 2, or an inner diameter surface of the retainer 3 makes contact with shoulders of the inner ring 1; therefore the retainer 3 is rotated. The former retainer 3 is called outer ring guide type (Fig. 8) whereas the latter is called inner ring guide type (Fig. 9) retainer 3.

Now, assume that a bearing has a rotating inner ring and a static outer ring as usual bearings. In the case where the bearing has a rolling element guide retainer 3, as shown in Fig. 7, the retainer 3 makes sliding contact with rolling elements 4 in a load zone of the bearing, on its pocket surfaces on a rotating-direction side and is rotated by a driving force received from the rolling elements 4.

In an outer ring guide retainer, the retainer also rotates as shown in Fig. 8, as it receives a driving force F for rotation from rolling elements 4 in the load zone, on its pocket surfaces on the rotating-direction side. However, the retainer 3 also receives a braking force against the rotation caused by sliding friction which is generated on the outer ring guide surface.

On the contrary, in an inner ring guide retainer 3, as shown in Fig. 9, the inner ring guide surface always has a greater circumferential speed than a circumferential speed of the retainer guide surface, which depends on a revolution speed, on a contact surface between the inner ring guide surface and the retainer 3. Therefore, the retainer receives a driving force F for rotation from its sliding friction on the inner ring guide surface. As a result, the rolling elements 4 in the load zone make contact with the retainer on pocket surfaces on the side opposite to the rotating-direction side, thereby limiting the rotating speed of the retainer 3.

Conventionally, Patent Literature 1 discloses a rolling bearing which includes a retainer 3 that is capable of providing a sufficient guide clearance "b" and arranging rolling elements at a uniform interval within the bearing upon radial movement of the retainer 3 while the bearing is rotating.

### CITATION LIST

### PATENT LITERATURE

Patent Literature 1: JP-A-2000-346079

### SUMMARY OF INVENTION

### TECHNICAL PROBLEM

In an angular ball bearing for a screw compressor which uses ammonia refrigerant, a retainer 3 is usually designed to make contact with either rolling elements 4 (balls) or a track ring for guided rotation.

The angular ball bearing for screw compressor is lubricated with the ammonia refrigerant, and the retainer 3 is made of a ductile iron (spherical graphite cast iron).

In contrast, typical material for a retainer 3 is a copper material such as High-Strength Cast Brass 1 (CAC301), or a steel material such as Carbon Steel for Machine & Structural Use (S30C). In comparison with these typical materials, ductile iron (spherical graphite cast iron) wears more quickly.

This poses a potential problem for a retainer 3 which is made of a ductile iron (spherical graphite cast iron) and is of a type in which the retainer 3 is guided by an inner ring 1, that is, even with a lubricant supply system for supplying lubricant to the guide surface, centrifugal forces at the time of rotation will force the lubricant to move toward the outer ring, making the lubricant not supplied enough onto the guide surface of the retainer 3, leading to wear of the retainer 3.

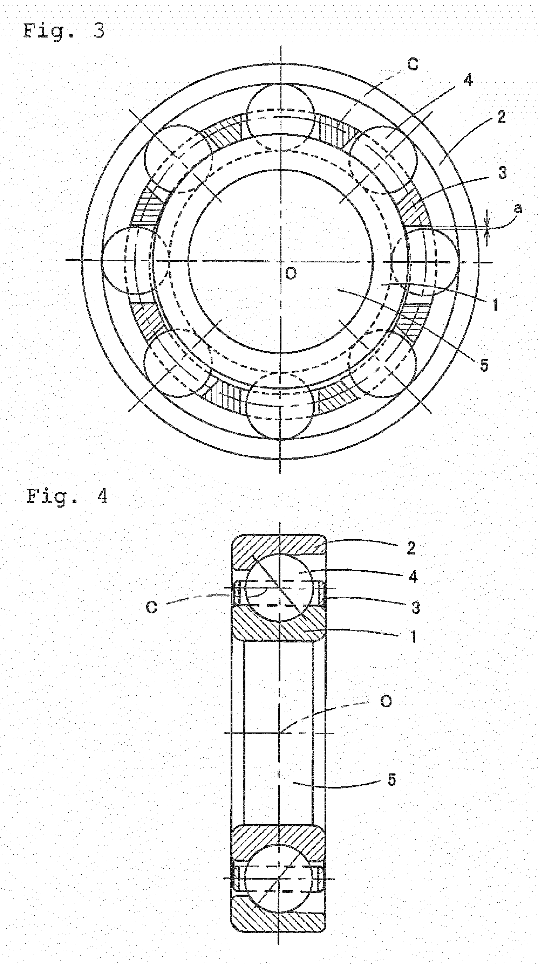

Particularly, in conventional retainers 3 in the angular ball bearings for screw compressors, a ratio of the pocket clearance "a" to the guide clearance "b" is not smaller than 100 percent, i.e., pocket clearance "a" > guide clearance "b", so that as shown in Fig. 3, there is contact between the retainer 3 and the inner ring 1 but there is not contact between the retainer 3 and the rolling elements 4 due to the pocket clearance "a".

As a result, in conventional angular ball bearings for screw compressors, the entire weight of the retainer 3 and centrifugal forces at the time of rotation all act onto the guide surface which is in contact with the inner ring 1. This increases a surface pressure in the guide area (contact area), leading to wear of the retainer 3 in case there is not enough supply of lubricant.

It is therefore an object of the present invention to provide a retainer 3 which can be made of a quick-wearing material such as ductile iron (spherical graphite cast iron) like the retainer 3 used in an angular ball bearing for a screw compressor yet can prevent premature wearing of the guide surface.

### SOLUTION TO PROBLEM

In order to achieve the object, the present invention provides a retainer 3 of an inner ring guide type for a rolling bearing, which makes contact with and guided by an inner ring 1 during operation, wherein the pocket clearance "a" has a ratio to the guide clearance "b" in a range from 75% through 100%.

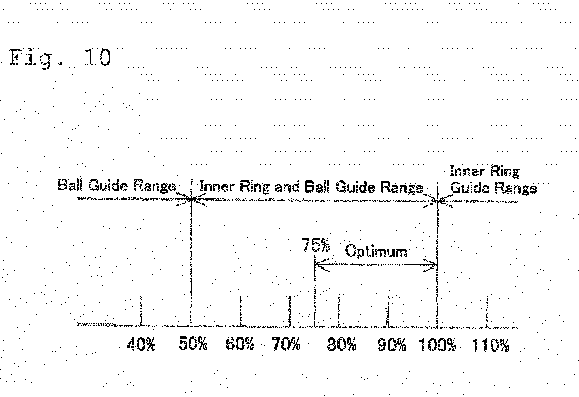

In other words, as shown in Fig. 10, in a range where the ratio of the pocket clearance "a" to the guide clearance "b" with respect to the inner ring 1 is not smaller than 100%, the pockets do not make contact with the rolling elements 3. In a range where the ratio of the pocket clearance "a" to the guide clearance "b" with respect to the inner ring 1 is not greater than 50%, the retainer 3 is brought into a floating state, i.e., this retainer 3 is a rolling element guide retainer.

In order for the retainer 3 to be guided by the inner ring 1 whereas the pockets and the rolling elements 4 make contact with each other, the ratio of the pocket clearance to the guide clearance with respect to the inner ring 1 must be from 50% through 100%. According to the present invention, the ratio of the pocket clearance "a" to the guide clearance "b" with respect to the inner ring 1 is selected from the range of 75% through 100%. This brings the retainer 3 into increased contact with the rolling elements 4 while the retainer is in contact with the inner ring 1, whereby a force which would otherwise act only onto the retainer 3 is now dispersed to contact surfaces between the pockets and the rolling elements 4, and the surface pressure between the retainer 3 and the inner ring surface is decreased.

### ADVANTAGEOUS EFFECTS OF INVENTION

According to the present invention, a force which would otherwise act only onto the retainer 3 is dispersed to contact surfaces between the pockets and the rolling elements 4, making it possible to decrease surface pressure between the retainer 3 and the inner ring surface and thereby prevent wear in the guide surface of the retainer 3.

Therefore, according to the present invention, the retainer 3 may be made of such a material as ductile iron (spherical graphite cast iron) which can be worn easily.

### BRIEF DESCRIPTION OF DRAWINGS

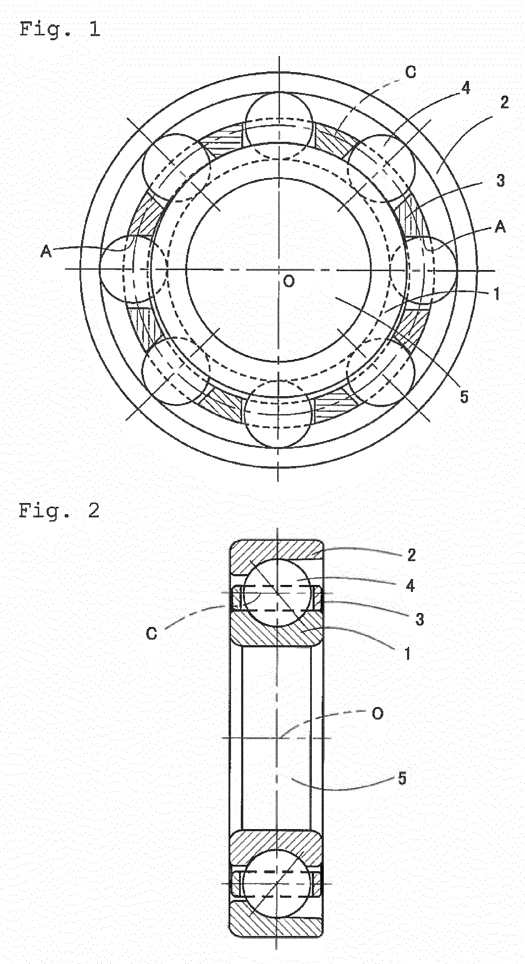

Fig. 1 is a front view which shows a relationship of a pocket clearance to a guide clearance of an inner ring during operation of a rolling bearing according to the present invention.
Fig. 2 is a side view showing a vertical section of the rolling bearing in Fig. 1.
Fig. 3 is a front view which shows a relationship of a pocket clearance to a guide clearance of an inner ring in a conventional rolling bearing.
Fig. 4 is a side view showing a vertical section of the rolling bearing in Fig. 3.
Fig. 5 is a front view of a rolling bearing in which a retainer is in a floating state.
Fig. 6 is a side view showing a vertical section of the rolling bearing in Fig. 5.
Fig. 7 is a partial front view of a rolling element guide retainer.
Fig. 8 is a partial front view of an outer ring guide retainer.
Fig. 9 is a partial front view of an inner ring guide retainer.
Fig. 10 is a graph which shows a relationship of the pocket clearance to the inner ring guide clearance.

### DESCRIPTION OF EMBODIMENTS

Hereinafter, embodiments of the present invention will be described based on the attached drawings.

Fig. 1 is a front view which shows an angular ball bearing for a screw compressor.

In this drawing, a reference symbol 1 indicates an inner ring, a reference symbol 2 indicates an outer ring, a reference symbol 3 indicates a retainer, a reference symbol 4 indicates a ball (rolling element), a reference symbol 5 indicates a shaft, a reference symbol C indicates a PCD of the rolling element 4, and a reference symbol O indicates a center of rotation of the bearing (shaft). It should be noted here that the retainer 3 in this drawing is shown as a sectional view. The retainer 3 is guided by an outer circumferential surface of the inner ring 2, and has a ratio of pocket clearance to guide clearance with respect to the inner ring 1 being in a range from 75% through 100%.

With the ratio of the pocket clearance to the guide clearance with respect to the inner ring 1 being selected within the range of 75% through 100%, the retainer 3 makes contact with the inner ring 1 during operation and further, the retainer 3 makes contact with the rolling elements 1 at contact points A, so that a force which would otherwise act only onto the retainer 3 is now dispersed to contact points A between the pockets of the retainer 3 and the rolling elements 4. This decreases surface pressure between the retainer 3 and the inner ring surface, and thereby prevents wear in the guide surface of the retainer 3.

In the present embodiment, the retainer 3 is made of a ductile iron (spherical graphite cast iron).

### REFERENCE SIGNS LIST

- 1: Inner Ring
- 2: Outer Ring
- 3: Retainer
- 4: Rolling Element
- 5: Shaft
- a: Pocket Clearance
- b: Guide Clearance
- A: Contact Point

## Claims

1. A retainer for a rolling bearing, the retainer being an inner ring guide retainer which makes contact with and guided by an inner ring during operation; the retainer having a guide clearance with respect to the inner ring, and a pocket clearance; wherein the pocket clearance has a ratio to the guide clearance in a range from 75% through 100%.

2. A retainer for a rolling bearing, made of a ductile iron.

3. An angular ball bearing for a screw compressor comprising the retainer according to Claim 1 or 2.
